# EUROPEAN PATENT APPLICATION

(11) **EP 4 715 649 A1**
(43) Date of publication of application: **25.03.2026**
(21) Application number: 24829870.5
(22) Date of filing: 26.02.2024
(51) Int. Cl.: G06F 21/62

(54) **DATA ACCESS METHOD, APPARATUS AND SYSTEM**

(30) Priority: 25.06.2023 CN 202310752941; 22.12.2023 CN 202311791307
(71) Applicant: Huawei Cloud Computing Technologies Co., Ltd., Guiyang, Guizhou, 550025 (CN)
(72) Inventor: LU, Zhiting, Shenzhen, Guangdong 518129 (CN); FANG, Xin, Shenzhen, Guangdong 518129 (CN)
(74) Representative: Pfenning, Meinig & Partner mbB
(86) International application number: PCT/CN2024/078482
(87) International publication number: WO 2025/001213

(57) **Abstract**

This application provides a data access method and a related device. The method is applied to an object storage service node, the object storage service node includes a hierarchical namespace, and the hierarchical namespace is used to map at least one object to a file or a directory in a directory tree. The method includes: receiving a file creation request, where the file creation request carries a first file name and a first file identifier of a parent directory of a first file; obtaining metadata of the parent directory that is of the first file and that corresponds to the first file identifier; creating the first file in the parent directory based on the metadata of the parent directory of the first file, and allocating a second file identifier to the first file, where the first file is a file or a directory in the directory tree; and recording a correspondence between the second file identifier and the first file name into a file index table. In this way, without parsing a full file path layer by layer, a user uses a file identifier to access a file or a directory stored in the object storage service node. This improves access efficiency of the user.

## Description

This application claims priorities to Chinese Patent Application No. 202310752941.X, filed with the China National Intellectual Property Administration on June 25, 2023 and entitled "METHOD AND APPARATUS FOR IMPLEMENTING FILE SEMANTICS THROUGH OBJECT STORAGE, AND ANOTHER DEVICE", and to Chinese Patent Application No. 202311791307.3, filed with the China National Intellectual Property Administration on December 22, 2023 and entitled "DATA ACCESS METHOD AND APPARATUS, AND SYSTEM", both of which are incorporated herein by reference in their entireties.

### TECHNICAL FIELD

This application relates to the field of storage technologies, and in particular, to a data access method and apparatus, and a system.

### BACKGROUND

File storage refers to storing data on a file storage service node in a form of files. Users may access the data on the file storage service node through a file interface provided by the file storage service node. Object storage refers to storing data on an object storage service node in a form of objects. Users access the data on the object storage service node through an object interface provided by the object storage service node.

Currently, to be compatible with some applications that can access data only through the file interface (referred to as file applications for short), the object storage service node provides object storage-based file services. In other words, the file applications may access the data on the object storage service node through a file interface provided by the object storage service node. However, because the object storage service node identifies a file by using a full file path, when accessing files stored in the object storage service node, clients of the file applications need to use full file paths for access. This causes low access efficiency.

### SUMMARY

This application provides a data access method and apparatus, and another device, to allocate, via a file identifier allocator, a file identifier to a file or a directory stored in an object storage service node. The file identifier is globally unique and identifies the file or the directory. Without parsing a full file path layer by layer, a user uses the file identifier to access the file or the directory stored in the object storage service node. This improves access efficiency of the user.

According to a first aspect, a data access method is provided. The method is applied to an object storage service node, a storage bucket of the object storage service node stores at least one object, the object storage service node includes a hierarchical namespace, and the hierarchical namespace is used to map the at least one object to a file or a directory in a directory tree. The method includes: receiving a file creation request, where the file creation request carries a first file name and a first file identifier of a parent directory of a first file; obtaining metadata of the parent directory that is of the first file and that corresponds to the first file identifier; creating the first file in the parent directory based on the metadata of the parent directory of the first file, and allocating a second file identifier to the first file, where the first file is a file or a directory in the directory tree; and recording a correspondence between the second file identifier and the first file name into a file index table.

In this embodiment, a file identifier allocator and the file index table are added to the object storage service node. When a user creates a file or a directory, the object storage service node generates a globally unique file identifier for the created file or directory via the file identifier allocator. The file identifier is a basic attribute of the file or the directory, and does not change once created. In addition, when the file identifier is generated, a correspondence between the file identifier and file information is recorded into the file index table. Based on the file index table, the user may query for metadata information of the file or the directory by using the file identifier. In this way, without parsing a full file path layer by layer, the user uses the file identifier to access the file or the directory stored in the object storage service node. This improves access efficiency of the user.

With reference to the first aspect, in some implementations of the first aspect, a file write request is received, where the file write request carries the to-be-written first file and the second file identifier. The first file name corresponding to the second file identifier is obtained from the file index table, where the first file name indicates metadata of the first file. The metadata of the first file is obtained, where the metadata of the first file includes a data layout of the first file. The first file is written into a first storage unit based on the data layout of the first file. The metadata of the first file is updated.

In this implementation, a file storage client writes a file into the object storage service node by using a file identifier. The object storage service node obtains, from the file index table, metadata information corresponding to the file identifier, and then writes the file based on a data layout of the file. In this way, a full file path does not need to be parsed layer by layer. This improves data access efficiency.

With reference to the first aspect, in some implementations of the first aspect, the metadata of the first file includes one or more of the following: a file size of the first file, creation time of the first file, access permission on the first file, and the data layout of the first file, and the data layout of the first file includes an identifier of the first storage unit storing the first file, an offset of the first file in the first storage unit, and a length of the first file in the first storage unit.

With reference to the first aspect, in some implementations of the first aspect, a first file read request is received, where the first file read request carries the second file identifier. The first file name corresponding to the second file identifier is obtained from the file index table. The metadata of the first file is obtained, where the metadata of the first file includes the data layout of the first file. The first file is read from the first storage unit based on the data layout of the first file.

In this implementation, after the object storage service node writes a file, the user may directly carry a file identifier to read the data. Without parsing a full file path layer by layer, the user obtains metadata information of the file based on the file identifier, and reads the file based on a data layout of the file. This improves data access efficiency.

With reference to the first aspect, in some implementations of the first aspect, a second file read request is received, where the second file read request carries an access path of the first file. The access path of the first file is parsed via the hierarchical namespace, to obtain the second file identifier of the first file. The first file name corresponding to the second file identifier is obtained from the file index table. Metadata of the first file is obtained. The first file is read from a first storage unit based on a data layout of the first file.

In this implementation, when a file storage client accesses the object storage service node by using a full file path to read a file, the object storage service node can identify two access manners: a file identifier and the full file path, and is still compatible with the full file path manner to access the file. The full file path is parsed via the hierarchical namespace, to obtain a file identifier of the file, and then the file is read based on the file identifier.

With reference to the first aspect, in some implementations of the first aspect, a third file read request is received, where the third file read request includes a file handle. The second file identifier in the file handle is identified via a gateway. The first file name corresponding to the second file identifier is obtained from the file index table. Metadata of the first file is obtained. The first file is read from a first storage unit based on a data layout of the first file.

In this implementation, a file storage client reads a file from the object storage service node according to a file protocol, and conversion from the file protocol to an object protocol that can be identified by the object storage service node can be implemented via the gateway. Even if according to the file protocol, the file storage client can still access, based on a file identifier, the file stored in the object storage service node. This improves data access efficiency. In addition, using the file identifier as an access identifier makes it easier to be compatible with the file protocol.

According to a second aspect, a data access method is provided. The method is applied to a file storage client, the file storage client accesses an object storage service node through a file interface, a storage bucket of the object storage service node stores at least one object, the object storage service node includes a hierarchical namespace, and the hierarchical namespace is used to map the at least one object to a file or a directory in a directory tree. The method includes: receiving a file creation instruction sent by an application for a first file, where the first file is a file or a directory in the directory tree; obtaining a first file identifier of a parent directory of the first file from a mapping relationship table; sending a file creation request to the object storage service node, where the file creation request carries a first file name and the first file identifier; and receiving a second file identifier allocated by the object storage service node, and recording a correspondence between the second file identifier and the first file name into the mapping relationship table.

In this embodiment, the file storage client constructs the mapping relationship table between a file name and a file identifier. When interacting with the object storage service node, the file storage client may directly query for the file identifier in the mapping relationship table cached by the file storage client. This reduces access traffic and access pressure of the object storage service node. In addition, for the file storage client, a process of constructing and caching a full file path layer by layer is reduced, thereby improving data access efficiency.

With reference to the second aspect, in some implementations of the second aspect, a file write instruction sent by the application for the first file is received. The second file identifier corresponding to the first file is obtained from the mapping relationship table of the file storage client. A file write request is sent to the object storage service node, where the file write request carries the second file identifier. A processing result of the file write request is received.

With reference to the second aspect, in some implementations of the second aspect, a first file read instruction sent by the application for the first file is received. The second file identifier corresponding to the first file is obtained from the mapping relationship table of the file storage client. A first file read request is sent to the object storage service node, where the first file read request carries the second file identifier. A processing result of the first file read request is received.

According to a third aspect, a data access apparatus is provided. The apparatus is used in an object storage service node, a storage bucket of the object storage service node stores at least one object, the object storage service node includes a hierarchical namespace, and the hierarchical namespace is used to map the at least one object to a file or a directory in a directory tree. The apparatus includes: a receiving module, configured to receive a file creation request, where the file creation request carries a first file name and a first file identifier of a parent directory of a first file; an obtaining module, configured to obtain metadata of the parent directory that is of the first file and that corresponds to the first file identifier; and a processing module, configured to: create the first file in the parent directory based on the metadata of the parent directory of the first file, and allocate a second file identifier to the first file, where the first file is a file or a directory in the directory tree. The processing module is further configured to record a correspondence between the second file identifier and the first file name into a file index table.

According to a fourth aspect, a data access apparatus is provided. The apparatus is used in a file storage client, the file storage client accesses an object storage service node through a file interface, a storage bucket of the object storage service node stores at least one object, the object storage service node includes a hierarchical namespace, and the hierarchical namespace is used to map the at least one object to a file or a directory in a directory tree. The apparatus includes: a receiving module, configured to receive a file creation instruction sent by an application for a first file, where the first file is a file or a directory in the directory tree; an obtaining module, configured to obtain a first file identifier of a parent directory of the first file from a mapping relationship table; and a sending module, configured to send a file creation request to the object storage service node, where the file creation request carries a first file name and the first file identifier. The receiving module is further configured to: receive a second file identifier allocated by the object storage service node, and record a correspondence between the second file identifier and the first file name into the mapping relationship table.

For technical principles and beneficial effects of the third aspect and the fourth aspect, refer to the foregoing related descriptions in the first aspect and the second aspect. Details are not described herein again.

According to a fifth aspect, this application provides a computing device cluster, including at least one computing device. Each computing device includes a processor and a memory. A processor of the at least one computing device is configured to execute instructions stored in a memory of the at least one computing device, to enable the computing device cluster to perform the method according to any one of the first aspect or the implementations of the first aspect.

According to a sixth aspect, this application provides a computing device cluster, including at least one computing device. Each computing device includes a processor and a memory. A processor of the at least one computing device is configured to execute instructions stored in a memory of the at least one computing device, to enable the computing device cluster to perform the method according to any one of the second aspect or the implementations of the second aspect.

According to a seventh aspect, this application provides a computer program product including instructions. When the instructions are run by a computing device cluster, the computing device cluster is enabled to perform the method according to any one of the first aspect or the implementations of the first aspect.

According to an eighth aspect, this application provides a computer program product including instructions. When the instructions are run by a computing device cluster, the computing device cluster is enabled to perform the method according to any one of the second aspect or the implementations of the second aspect.

According to a ninth aspect, this application provides a computer-readable storage medium, including computer program instructions. When the computer program instructions are executed by a computing device cluster, the computing device cluster performs the method according to any one of the first aspect or the implementations of the first aspect.

According to a tenth aspect, this application provides a computer-readable storage medium, including computer program instructions. When the computer program instructions are executed by a computing device cluster, the computing device cluster performs the method according to any one of the second aspect or the implementations of the second aspect.

### BRIEF DESCRIPTION OF DRAWINGS

To describe technical solutions in embodiments of this application or in the background more clearly, the following describes accompanying drawings that need to be used in embodiments of this application or in the background.
FIG. 1 is a diagram of a data access scenario according to this application;
FIG. 2 is a diagram of an architecture of an object storage client according to this application;
FIG. 3 is a diagram of an architecture of an object storage service node according to this application;
FIG. 4 is a diagram of a data access architecture according to this application;
FIG. 5 is a diagram of mapping between an object storage space and a file storage space according to this application;
FIG. 6 is a diagram of a data access architecture according to this application;
FIG. 7 is one of schematic flowcharts of data access according to this application;
FIG. 8 is a diagram of mapping between an object storage space and a file storage space according to this application;
FIG. 9 is one of schematic flowcharts of data access according to this application;
FIG. 10 is a schematic flowchart of file writing according to this application;
FIG. 11 is one of schematic flowcharts of file reading according to this application;
FIG. 12 is one of schematic flowcharts of file reading according to this application;
FIG. 13 is one of schematic flowcharts of file reading according to this application;
FIG. 14 is a diagram of a structure of a data access apparatus according to this application;
FIG. 15 is a diagram of a structure of another data access apparatus according to this application;
FIG. 16 is a diagram of a structure of a computing device according to this application;
FIG. 17 is a diagram of a structure of a computing device cluster according to this application; and
FIG. 18 is a diagram of a structure in which computing devices are connected via a network according to this application.

### DESCRIPTION OF EMBODIMENTS

The following describes technical solutions in embodiments of this application with reference to the accompanying drawings in embodiments of this application.

In descriptions of embodiments of this application, unless otherwise specified, the term "and/or" in this specification describes an association relationship between associated objects and indicates that three relationships may exist. For example, A and/or B may indicate the following three cases: Only A exists, both A and B exist, and only B exists. The character "/" in this specification indicates an "or" relationship between the associated objects. For example, A/B indicates A or B. A and B may be singular or plural.

In the descriptions of embodiments of this application, unless otherwise specified, the term "a plurality of" in this specification means two or more. "At least one of the following items (pieces)" or a similar expression thereof indicates any combination of these items, including any combination of singular items (pieces) or plural items (pieces). For example, at least one of a, b, or c may indicate: a, b, c, a and b, a and c, b and c, or a, b, and c, where a, b, and c may be singular or plural. For example, a plurality of processing units mean two or more processing units, and a plurality of elements mean two or more elements.

In addition, to clearly describe the technical solutions in embodiments of this application, terms such as "first" and "second" are used in embodiments of this application to distinguish between same items or similar items that have basically same functions and purposes. Persons skilled in the art may understand that the terms such as "first" and "second" do not limit a quantity or an execution sequence, and the terms such as "first" and "second" do not indicate a definite difference.

In addition, in embodiments of this application, the word like "example" or "for example" is used to represent giving an example, an illustration, or a description. Any embodiment or design scheme described as an "example" or "for example" in embodiments of this application should not be explained as being more preferred or having more advantages than another embodiment or design scheme. Exactly, use of the word like "example" or "for example" is intended to present a related concept in a specific manner.

In the descriptions of embodiments of this application, unless otherwise specified, "a plurality of" means two or more. To make the technical solutions provided in this application clearer, before the technical solutions provided in this application are specifically described, related terms are first explained.
(1) File system (File System): The file system is software that is responsible for managing and storing file information in an operating system. The file system includes a basic file system and several file subsystems. A user may remove and install the file subsystem based on needs. A directory tree provided by the file system includes a root directory, a subdirectory, and a file in the subdirectory. The root directory or the subdirectory may include a file and a next-level subdirectory.
(2) File storage service (File Storage Service, FSS): The file storage service refers to storing data on a file storage service node in a form of files. The file storage service node provides a multi-level tree directory storage method based on the file system. The file storage service node is configured to provide the user with operations (namely, file services), for example, file reading, file writing, file creation, file deleting, file opening, file closing, and file renaming (Rename), that comply with file semantics. The file storage service node provides a file interface, and the file interface may indicate an operation that complies with the file semantics. For example, the file interface may be a portable operating system interface (Portable Operating System Interface, POSIX), and the user may access data in the file storage service node through the POSIX interface. It should be noted that when the user accesses data through the file interface, the data may be referred to as a file.
(3) Object storage service (Object Storage Service, OBS): The object storage service refers to storing data on an object storage node in a form of objects. The object storage node provides a flat storage manner that is based on storage buckets and objects. All objects in the storage bucket are at a same logical level, and a multi-level tree directory structure in the file storage service node is removed. An object storage system is configured to provide the user with operations (namely, object services), for example, object uploading, object downloading, listing all objects in the storage bucket, object copying, object moving, object renaming, object deleting, deleting all the objects in the storage bucket, and deleting a plurality of specified objects, that comply with object semantics. The object storage node provides an object interface, and the object interface may indicate an operation that complies with the object semantics. For example, the object interface may be a representational state transfer (Representational State Transfer, REST) application programming interface (Application Programming Interface, API), and the user may access data in the object storage service node through the REST API interface. It should be noted that when the user accesses data through the object interface, the data may be referred to as an object.
(4) Object (Object): The object is a basic unit for data storage in the object storage system. An object is actually a collection of data and related attribute information (metadata) of a file. Data uploaded by a tenant to the OBS is stored in a bucket in a form of objects. The object includes three parts: a key (Key), metadata (Metadata), and data (Data). The key is a name of the object. For example, the key is a character sequence that is obtained through UTF-8 encoding and whose length is greater than 0 and does not exceed 1024. Each object in one bucket has a unique object key.
(5) Bucket (Bucket): The bucket is a container for storing objects in the OBS. Object storage is a flat storage manner that is based on buckets and objects. All objects in the bucket are at a same logical level, and a multi-level tree directory structure in the file system is removed. Each bucket has its own attributes such as a storage class, access permission, and a region to which the bucket belongs. The tenant may create buckets with different storage classes and different access permission and configure more advanced attributes to meet storage requirements in different scenarios.
(6) Object storage device (Object Storage Device, OSD): The OSD is a basic storage unit of the object storage system, is set on a physical disk, and is specifically a storage space with a fixed size of the physical disk. The object storage system manages physical disks of a plurality of computing devices in a form of OSDs.

With the development of storage technologies, object storage is proposed in related technologies to store unstructured data such as movies, office documents, and images more conveniently. In the object storage, a flat address space is used to store data. There is no hierarchy of directories and files in the address space. Therefore, an object storage system can store a large amount of data.

In the object storage, a tenant may use a pre-registered account and password to log in to a cloud management platform on a public cloud access page. After the login is successful, the tenant may select and purchase corresponding public cloud services such as an OBS, a virtual machine service, and a container service on the public cloud access page. For the OBS, the tenant may further create a plurality of buckets through a configuration interface or an API on the public cloud access page provided by the cloud platform. A total quantity and a total size of objects stored in each bucket are not limited. The tenant does not need to consider data scalability. The OBS is a service that is based on an REST API and a hypertext transfer protocol (Hypertext Transfer Protocol, HTTP) or hypertext transfer protocol secure (Hypertext Transfer Protocol Secure, HTTPS). The tenant may locate a bucket resource by using a uniform resource locator (Uniform Resource Identifier, URI) that is also referred to as an access domain name in this application, and is also referred to as a domain name for short. In the OBS, a bucket name is globally unique and cannot be modified. To be specific, a name of a bucket created by the tenant cannot be the same as a name of another bucket that has been created by the tenant and cannot be the same as a name of a bucket created by another tenant.

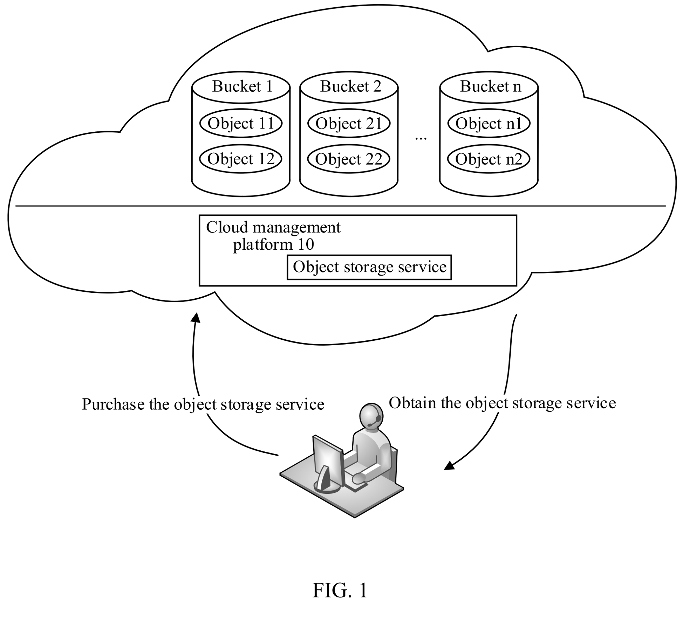

FIG. 1 is a diagram of at least one application scenario according to this application. As shown in FIG. 1, each bucket may include a plurality of objects, and objects in buckets are isolated from each other. A tenant logs in to a cloud management platform 10 via an object storage client, and selects and purchases a cloud service of an object storage service on the cloud management platform 10. After the purchase, the tenant may perform object storage based on a function provided by the object storage service. The cloud management platform 10 is mainly configured to manage infrastructure for running the object storage service. For example, the infrastructure for running the object storage service may include a plurality of data centers disposed in different regions, and each data center includes a plurality of servers. The data center may provide a basic resource for the object storage service, for example, a computing resource or a storage resource. Therefore, when purchasing and using the object storage service, the tenant pays for a used resource. Specifically, the object storage service provides a domain name of a bucket. The tenant may access the domain name of the bucket via the object storage client, to upload data to the bucket or download data from the bucket. The uploaded data is stored in the bucket in a form of objects.

When uploading an object, the tenant may specify a storage class of the object. If no storage class is specified, the storage class is consistent with a storage class of a bucket by default. After the object is uploaded, the storage class of the object may be modified, and the bucket may be accessed via the object storage client. The object storage client may be a browser locally used by the tenant or a dedicated object storage client provided by the cloud platform. For example, the tenant may access a bucket via a browser set on a local computer. After an account is entered and verified, the tenant may use the browser to upload an object to the bucket, or perform an operation like modifying or deleting an object in the bucket. The local computer is connected to the internet.

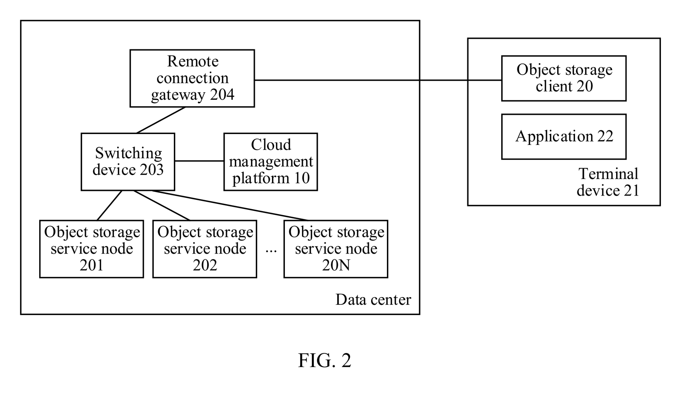

The following describes, with reference to FIG. 2, a system architecture to which this application is applicable. Refer to FIG. 2. In this embodiment, an object storage client 20 may be deployed on a user side, for example, may be deployed on a terminal device 21 outside a data center. An application 22 may be further deployed on the terminal device 21. A specific type of the terminal device is not limited in this application. For example, the terminal device may be a mobile phone, a notebook computer, a tablet computer, a palmtop computer, a wireless terminal in a smart city, or a wireless device in a smart home. The object storage client 20 may interact with the application 22. For example, a tenant may trigger the application 22 to send a data modification request to the object storage client 20. After receiving the data modification request, the object storage client 20 may send a data write request to the application 22 based on the data modification request.

A cloud management platform 10 is disposed in the data center, and is separately connected to object storage service nodes (the object storage service nodes may be referred to as object storage service nodes for short, and only an object storage service node 201 and an object storage service node 202 are drawn as examples in this application) and a remote connection gateway 204 via a switching device 203.

The tenant may log in to the cloud management platform 10 by using an account on the object storage client 20, create a bucket, configure a bucket name, and obtain a bucket domain name by using the cloud management platform 10. After detecting operations (for example, creating the bucket, configuring the bucket name, and the like) of the tenant, the cloud management platform 10 may deliver a creation instruction to the object storage service node (for example, the object storage service node 201 or the object storage service node 202) via the switching device 203, where the creation instruction includes information such as the bucket name and the bucket domain name, and notify the object storage service node to create the bucket and store information such as the bucket name and the bucket domain name.

After the bucket is created, the tenant may further access the bucket domain name by operating the object storage client 20, to locate the bucket in the object storage service node, upload data (for example, upload an object) to the bucket, and download data (for example, download an object) from the bucket. In this application, the tenant may further modify an object in the bucket by operating the object storage client 20. To be specific, the tenant may trigger the object storage client 20 to send a data write request to the object storage service node, to indicate to modify to-be-modified data in a target object stored in the bucket of the object storage service node.

After receiving the data write request, the object storage service node may determine the target object in the bucket based on the bucket name and a name of the target object that are carried in the data write request, and modify the to-be-modified data to modified data based on an offset of the to-be-modified data in the target object and a data length of the to-be-modified data that are carried in the data write request.

For example, the remote connection gateway 204 may be implemented by a virtual private network (Virtual Private Network, VPN) or a private line network, and the object storage service node may be implemented by a server disposed with a plurality of physical disks.

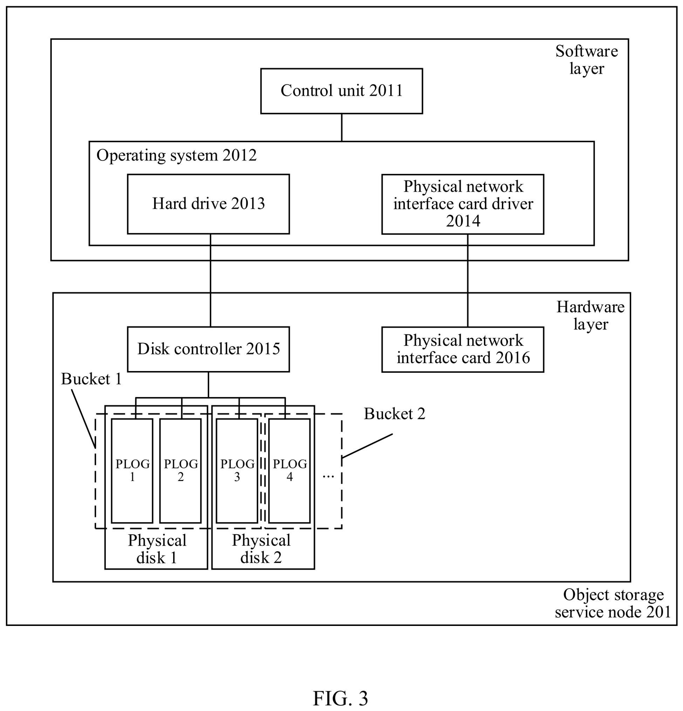

The following specifically describes the object storage service node. The object storage service node 201 is used as an example to describe a structure of the object storage service node. Refer to FIG. 3. The object storage service node 201 includes a software layer and a hardware layer. The hardware layer includes a disk controller 2015, a physical network interface card 2016, a physical disk 1, and a physical disk 2 (that the object storage service node 201 includes the two physical disks is only used as an example for description herein, and a quantity of physical disks in the object storage service node is not limited in this application). The software layer includes an object storage device control unit 2011 and an operating system 2012. The control unit 2011 runs on the operating system 2012. The operating system 2012 includes a disk driver 2013 and a physical network interface card driver 2014. The cloud management platform 10 may communicate with the control unit 2011 through the physical network interface card 2016. The control unit 2011 controls, via the disk driver 2013, the disk controller 2015 to set the physical disk 1 and the physical disk 2 as a plurality of persistent storage units (Persistence Log, PLOG). In this application, the PLOG is only used as an example of a basic storage unit, and any storage space that can be used as a basic storage unit is applicable to this application. After receiving a creation instruction of a bucket 1, the cloud management platform 10 notifies the control unit 2011 to create the bucket 1. The control unit 2011 creates the bucket 1 on the physical disk 1 and the physical disk 2 at the hardware layer via the operating system, where PLOGs of the bucket 1 are distributed in the physical disk 1 and the physical disk 2, and the control unit 2011 stores information such as a bucket name and a bucket domain name of the bucket 1.

When the tenant needs to upload an object to the bucket 1 via the object storage client 20, the tenant may trigger, via the object storage client 20, the object storage service node 201 to write the object into the bucket. For example, the control unit 2011 in the object storage service node 201 may write the object into the bucket. When the tenant needs to download an object from the bucket 1 via the object storage client 20, the tenant may trigger, via the object storage client 20, the object storage service node 201 to read the object from the bucket. For example, the control unit 2011 in the object storage service node 201 may obtain the object from the bucket, and feed back the object to the object storage client 20.

The foregoing descriptions are provided by using the object storage service node as a granularity. From a function perspective, internal interaction of the object storage service node may be understood as interaction between functional layers.

An OBS is used to store an object in a flat namespace and provide an object storage service in a form of a key-value pair Key-Value. A user may uniquely obtain content of the object based on an object name (Key). Generally, the object may be managed as a file. To facilitate data management by the tenant, the object storage service provides a manner of simulating a folder by adding "/" to the object name, for example, "test/123.jpg". In this case, "test" is simulated as a folder, and "123.jpg" is simulated as a file name in the folder "test". Essentially, the object name (Key) is "test/123.jpg", and data (Data) is a file 123.jpg. Although the user may use a similar name: test1/test.jpg, this does not mean that the object of the user is stored in a directory: test1. For the OBS, test1/test.jpg is only a character string and is not essentially different from a.jpg.

However, currently, many types of big data, data analysis applications, and artificial intelligence simulations store data in a hierarchical namespace with an infinite depth of nesting and atomic operations. For example, the hierarchical namespace is configured in many types of big data, data analysis applications, and file systems for use. The file system is a typical tree-like index structure. For a file named test1/test.jpg, in an access process, a directory: test1 needs to be first accessed, and then the directory is searched for a file named test.jpg. Therefore, the file system may easily support folder operations such as directory renaming, directory deleting, and directory moving.

Therefore, to be compatible with a file application, and to use a hierarchical directory structure in an object storage system with a flat namespace, the object storage service node provides a hierarchical namespace for a file system operation of an object storage structure, that is, constructing a file service based on object storage. That is, the file application may access data on the object storage service node through a file interface provided by the object storage service node.

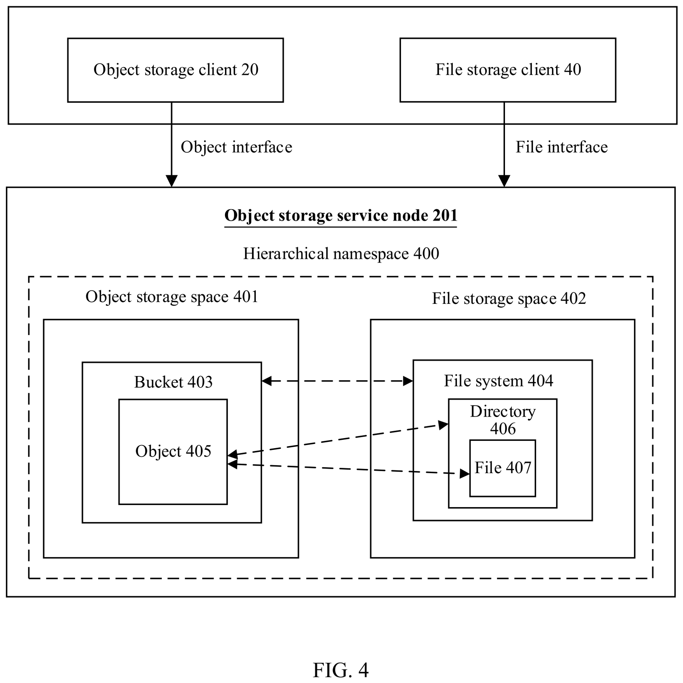

FIG. 4 is a diagram of an architecture of a hierarchical namespace according to this application. The object storage service node 201 is used as an example to describe a hierarchical namespace in the object storage service node. Refer to FIG. 4. The object storage service node 201 stores a plurality of objects. The hierarchical namespace 400 maps an identifier of an object stored in an object storage space 401 to an identifier (or a path) of a file or a directory in a file storage space 402, and the mapping is stored in the hierarchical namespace 400. In other words, a plurality of objects in the object storage space 401 are organized into a multi-level directory hierarchy structure of the file storage space 402. The object storage space 401 is a flat namespace, and the file storage space 402 is a hierarchical namespace. The two namespaces may coexist in the object storage service node 201, and allow a user to access, in two different manners, data stored in the object storage service node 201. For example, the user may access, via the object storage client 20 according to REST API and HTTP protocols through an object interface, an object 405 stored in a bucket 403 in the object storage space 401, or may access, via a file storage client 40 according to a network file system (Network File System, NFS) protocol, a file 407 stored in a directory 406 in a file system 404 in the file storage space 402.

The object storage space 401 stores data by using a two-layer data model: bucket-object (which may also be considered as directory-object), and the file storage space 402 stores data by using a directory tree structure: file system-directory-subdirectory-file. Therefore, the hierarchical namespace 400 may map the bucket 403 in the object storage space 401 to the file system 404 in the file storage space 402, and may map the object 405 to the directory 406 or the file 407. In other words, the hierarchical namespace 400 maps a plurality of objects in the bucket 403 to a plurality of nodes in a directory tree.

It should be noted that when a node is a file, the node may also be referred to as a file node. When a node is a directory, the node may also be referred to as a directory node. When an object is mapped to a file node, the object may include user data, metadata, and an object ID. When an object is mapped to a directory node, the object may include metadata and an object ID.

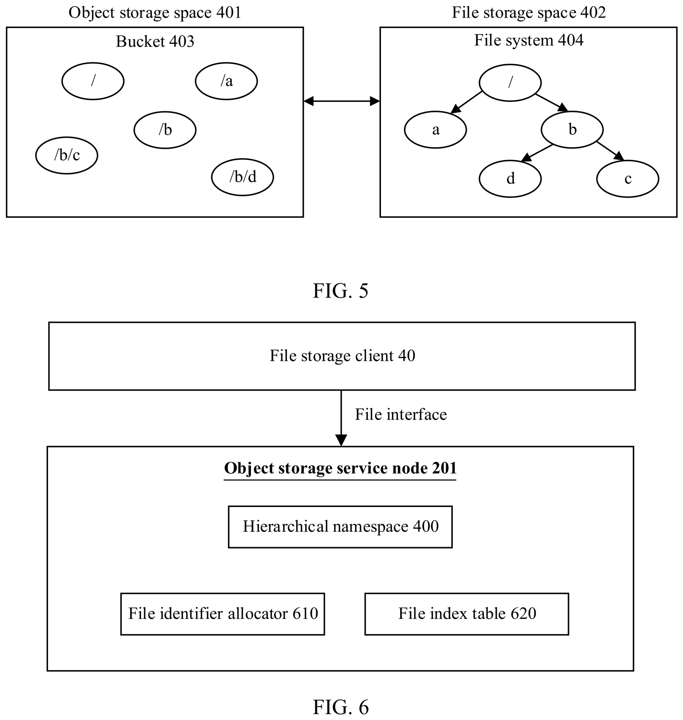

For example, as shown in FIG. 5, the object storage service node 201 may map an object "/" in the bucket 403 to a root directory "/" in the file system 404, map an object "/b" to a directory "b", and map an object "/b/c" to a file "c", that is, map an object to a directory or a file in the file system in a full path manner.

The object storage service node 201 maps a bucket-object identifier in the flat namespace in the object storage space to "forward slash /+file name" in the file storage space to simulate a folder, and organizes the folder into a multi-level directory tree structure, so that a single atomic operation of renaming a directory or a file can be implemented. However, the object storage service node identifies a file by using a full path. When the user accesses the file, the object storage service node needs to parse the full path layer by layer to access the file stored in a directory in the file system. A deeper accessed directory indicates more consumed resources and lower access efficiency. In addition, in a cache of the client, a full path needs to be traversed and constructed layer by layer by using a directory tree structure. Consequently, when the client and the service node access the file, access efficiency is low.

To resolve a problem of low access efficiency of a client and an object storage service node, this application proposes a data access method, to allocate, via a file identifier allocator, a file identifier to a file or a directory stored in the object storage service node. The file identifier is globally unique and identifies the file or the directory. Without parsing a full file path layer by layer, a user uses the file identifier to access the file or the directory stored in the object storage service node. This improves access efficiency of the user.

For ease of understanding, the following first describes at least one application scenario of embodiments of this application.

For example, FIG. 6 is a diagram of at least one application scenario according to an embodiment of this application. As shown in FIG. 6, a file identifier allocator 610 and a file index table 620 are added to an object storage service node 201. When a user creates a file or a directory, the object storage service node 201 generates a globally unique file identifier for the created file or directory via the file identifier allocator 610. The file identifier is a basic attribute of the file or the directory, and does not change once created. In addition, when the file identifier is generated, a correspondence between the file identifier and file information is recorded into the file index table 620. Based on the file index table 620, the user may query for metadata information of the file or the directory by using the file identifier.

The following describes, based on the content described above, a data access method provided in this application. It may be understood that the method is proposed based on the content described above. For some or all content in the method, refer to the foregoing descriptions.

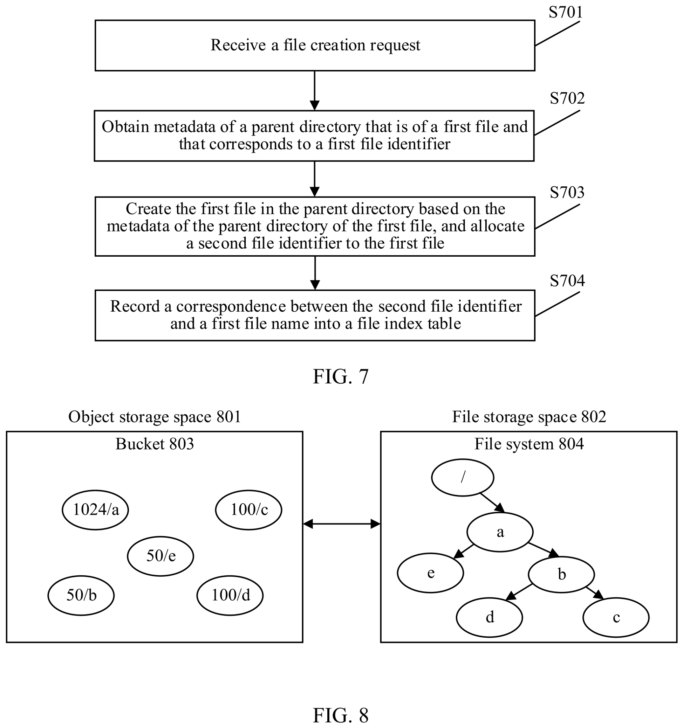

For example, FIG. 7 is a schematic flowchart of a data access method according to this application. It may be understood that the method may be implemented in any appropriate apparatus, device, platform, or device cluster that has computing, processing, and storage capabilities. As shown in FIG. 7, the method may include steps S701 to S704.

Step S701: Receive a file creation request.

In this embodiment, an object storage service node receives the file creation request sent by a file storage client, where the file creation request is used to request the object storage service node to create a first file, and the first file is created in a parent directory of the first file. The object storage service node may be an object storage service node 201. The following uses this as an example for description.

Optionally, when sending the file creation request, the file storage client may query a cache of the file storage client for a first file identifier corresponding to the parent directory of the first file, to send a name of the first file that needs to be created and the first file identifier of the parent directory of the first file to the object storage service node.

In this embodiment, after receiving the file creation request, the object storage service node first determines an access manner of the file creation request. For example, the file creation request is used to access the object storage service node by using a file identifier, or access the object storage service node by using a full file path. An access identifier of the file creation request may be used to determine whether the file creation request is used to access the object storage service node by using the file identifier or the full file path. The access identifier may be in a plurality of forms, for example, may be carried by using a query (query) parameter, may be carried by using a header field of the file creation request, or may be carried by using a special prefix or a special suffix of a URI, but is not limited thereto.

In an example, the file creation request may carry an identifier type of the file identifier by using the query parameter, for example, carry a file identifier 100/c by using the query parameter, that is, a file whose file name is c is created in a parent directory whose file identifier is 100. For example, the file creation request may be shown as follows:
create 100/c
Host: xxxx
Connection: xxx

In an example, the header field of the file creation request may be used for carrying in the file creation request. For example, Uritype is used to identify that the file creation request is used for access by using the full file path. For example, the file creation request may be shown as follows:
Uritype: path

In an example, the special prefix or the special suffix of the URI may be used for carrying in the file creation request. For example, a special prefix FILEID_200/c is used to identify that the file creation request is used for access by using the file identifier. For example, the file creation request may be shown as follows:
create/FILEID_200/c

Step S702: Obtain metadata of the parent directory that is of the first file and that corresponds to the first file identifier.

In this embodiment, the object storage service node receives the file creation request sent by the file storage client, where the file creation request carries a first file name and the first file identifier of the parent directory of the first file, queries a file index table 620 for the metadata corresponding to the parent directory of the first file, obtains layout information of the parent directory, queries whether the parent directory is a valid directory, that is, determines whether the directory is not deleted, and queries whether the first file exists in the parent directory.

Step S703: Create the first file in the parent directory based on the metadata of the parent directory of the first file, and allocate a second file identifier to the first file.

In this embodiment, if the first file does not exist in the parent directory corresponding to the first file identifier, and the parent directory is the valid directory, the object storage service node creates the first file in the parent directory, and allocates the second file identifier to the first file via a file identifier allocator 610 in the object storage service node. The file identifier allocator 610 may allocate a globally unique file identifier to the first file based on a logical clock or a cluster ID allocator. An allocation manner only needs to ensure that the file identifier is globally unique and cannot be repeated. However, a specific allocation manner is not limited thereto. In addition, a length, a type, and a composition manner of the file identifier are not specifically limited in this embodiment of this application.

In an example, as shown in FIG. 5, when a directory b is created, the file identifier allocator 610 may allocate a file identifier 100 to the directory b. When a file c is created in the parent directory b, the file identifier allocator 610 may allocate a file identifier 200 to the file c.

Step S704: Record a correspondence between the second file identifier and the first file name into the file index table.

In this embodiment, after creating the first file in the parent directory and allocating the second file identifier to the first file, the object storage service node records the correspondence between the second file identifier and the first file name into the file index table. Based on the file index table, metadata information of the first file may be queried for by using the second file identifier.

In an example, as shown in FIG. 8, the object storage service node maps an object in a bucket 803 of an object storage space 801 to a file or a directory in a file system 804 of a file storage space 802, and the file identifier allocator 610 allocates a file identifier 1024 to a root directory, allocates a file identifier 50 to a directory a, allocates a file identifier 100 to a directory a/b, allocates a file identifier 200 to a file a/b/c, and allocates a file identifier 300 to a file a/b/d. After the file identifier allocator 610 allocates the file identifier to the file or the directory, the object in the bucket 803 is stored by using a file identifier of a parent directory and a file name. For example, the directory a is stored by using "1024/a", and the file a/b/c is stored by using "100/c".

In an example, after the file identifier allocator 610 allocates the file identifier to the file or the directory, a correspondence between the file identifier and a name of the file or the directory is stored in the file index table 620, as shown in Table 1. The file identifier is a key in the file index table, and the name of the file or the directory is a value in the file index table.

**Table 1 File index table**

| Key | Value |
|---|---|
| 50 | 1024/a |
| 100 | 50/b |
| 200 | 100/c |
| 300 | 100/d |

In an example, metadata information corresponding to a file name in the file index table may be obtained from a metadata index table in the object storage service node by using the file name, as shown in Table 2. Therefore, metadata information of the file or the directory may be directly obtained by using the file identifier. Metadata of the file may be used to describe an attribute of the file. The metadata of the file includes at least one of the following: a file size of the file, creation time of the file, modification time of the file, access permission on the file, and a data layout of the file, and the data layout of the file includes an identifier of a storage unit storing the file, an offset of the file in the storage unit, and a length of the file in the storage unit. In addition, the metadata of the file may also include a file index number of the file.

**Table 2 Metadata index table**

| Key | Value |
|---|---|
| 1024/a | File metadata information, 50 |
| 50/b | File metadata information, 100 |
| 100/c | File metadata information, 200 |
| 100/d | File metadata information, 300 |

In this way, in this embodiment, the file identifier allocator allocates the file identifier to the file or the directory, so that when a user accesses the file, the file identifier is globally unique and identifies the file or the directory. Without parsing the full file path layer by layer, the user uses the file identifier to access the file or the directory stored in the object storage service node. This improves access efficiency of the user.

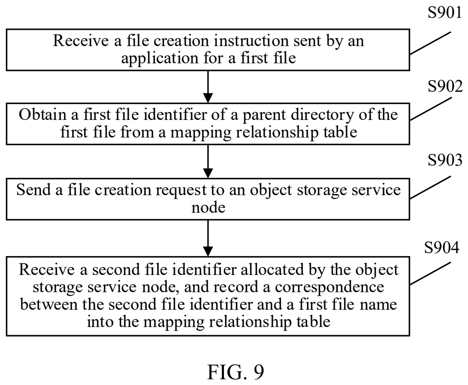

In some possible implementations, to improve data access efficiency, a file storage client may use a file identifier as a key to construct a mapping relationship table shown in Table 1. When interacting with an object storage service node, the file storage client may directly query for the file identifier in the mapping relationship table cached by the file storage client. This reduces access traffic and access pressure of the object storage service node, and reduces a process of constructing a full file path layer by layer, thereby improving the data access efficiency. In this embodiment, as shown in FIG. 9, the data access method may further include steps S901 to S904.

Step S901: Receive a file creation instruction sent by an application for a first file.

In this embodiment, the file storage client may receive the file creation instruction sent by the application for the first file, where the file creation instruction is used to instruct to create the first file in the object storage service node. The first file is a file or a directory that is in a directory tree and to which a hierarchical namespace maps at least one object stored in a storage bucket of the object storage service node. The file storage client may be a file storage client 40, and the object storage service node may be an object storage service node 201. The following uses this as an example for description.

In an example, the application invokes a file creation instruction create(c) for a file "c".

Optionally, the file storage client may be implemented based on a private file storage client, for example, implemented based on a filesystem in userspace (Filesystem in Userspace, Fuse), and can export a file system to an interface of a Linux kernel via a userspace program, so that an unprivileged user can create its own file system without editing kernel code. The FUSE-based file storage client provides two APIs: a "high-level" synchronous API and a "low-level" asynchronous API. Both of the APIs receive a request from the kernel and transfer the request to a main program (fuse_main function). The main program uses a corresponding callback function for processing. When the high-level API is used, the callback function works by using file names (file names) and paths (paths) instead of index nodes inodes. That the callback function returns means that processing of a request is completed. When the low-level API is used, the callback function needs to work by using the index node inode, and a set of independent API functions need to be explicitly used for response sending.

Optionally, the high-level API constructs an access manner of a full file path, and uses the full file path as an access identifier of access. However, implementation costs of using the high-level are low, but efficiency is low. When the FUSE-based file storage client transfers the full file path, the full file path needs to be constructed layer by layer. In addition, the high-level API cannot be used to construct a cache of the full file path and cannot be used to support file renaming. However, the low-level API can be used to support a file identifier as an access identifier of access, maintain a metadata cache that uses the file identifier as an index, and support file renaming and the like. A mapping relationship table is constructed in the file storage client, to reduce access traffic and access pressure of the object storage service node.

Step S902: Obtain a first file identifier of a parent directory of the first file from the mapping relationship table.

In this embodiment, after receiving the file creation instruction sent by the application for the first file, the file storage client obtains the first file identifier of the parent directory of the first file from the mapping relationship table cached by the file storage client. The mapping relationship table stores a correspondence between the file name and the file identifier. When interacting with the object storage service node, the file storage client may directly query for the file identifier in the mapping relationship table cached by the file storage client, to determine the first file identifier of the parent directory of the first file.

For example, in the cache of the file storage client, it is found that a parent directory of the file "c" is /a/b, and a file identifier of the parent directory is 200.

Step S903: Send a file creation request to the object storage service node.

In this embodiment, after obtaining the first file identifier of the parent directory of the first file from the mapping relationship table, the file storage client sends the file creation request to the object storage service node, where the file creation request is used to request to create the first file in the object storage service node, and the file creation request carries a first file name and the first file identifier of the parent directory.

In an example, the file storage client sends a file write request PUT/100/c?uritype=fileid, to indicate to access the object storage service node by using the file identifier fileid and create the file c in a parent directory whose file identifier is 100.

Optionally, the file storage client may include an access identifier in the file creation request to identify whether the file creation request is used for accessing based on a full file path or based on a file identifier. The access identifier may be in a plurality of forms, for example, may be carried by using a query (query) parameter, may be carried by using a header field of the file creation request, or may be carried by using a special prefix or a special suffix of a URI, but is not limited thereto.

Step S904: Receive a second file identifier allocated by the object storage service node, and record a correspondence between the second file identifier and the first file name into the mapping relationship table.

In this embodiment, after the object storage service node creates the first file in the parent directory, and allocates the second file identifier to the first file via a file identifier allocator 610 in the object storage service node, the object storage service node sends the second file identifier of the first file to the file storage client. After receiving the second file identifier allocated by the object storage service node, the file storage client records the correspondence between the second file identifier and the first file name into the mapping relationship table.

In this way, in this embodiment, the file storage client caches the mapping relationship table between the file identifier and the file name. When interacting with the object storage service node, the file storage client may directly query for the file identifier in the mapping relationship table cached by the file storage client. This reduces access traffic and access pressure of the object storage service node. In addition, for the file storage client, a process of constructing and caching a full file path layer by layer is reduced, thereby improving data access efficiency.

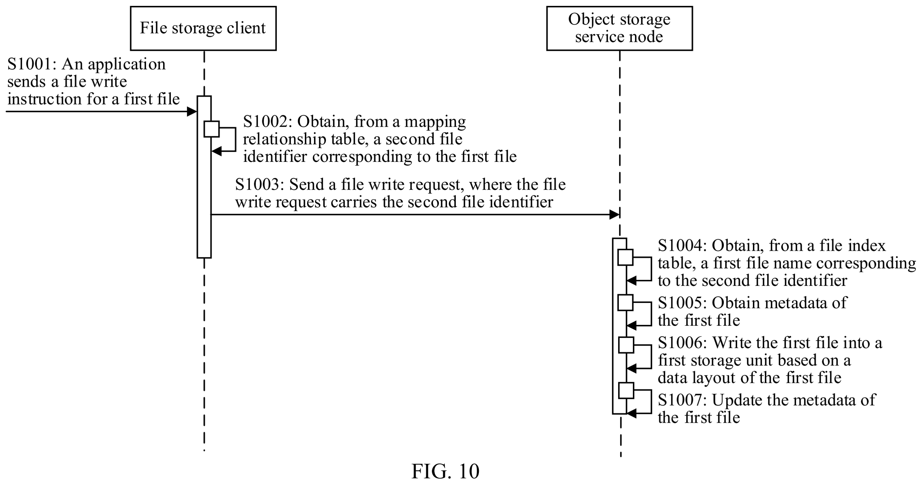

In some possible implementations, as shown in FIG. 10, the data access method further includes steps 1001 to 1007.

Step S1001: An application sends a file write instruction for a first file.

In this embodiment, after creating the first file in a parent directory of the first file, an object storage service node needs to write data content of the first file. The application sends the file write instruction for the first file to a file storage client, where the file write instruction is used to instruct the file storage client to write the data content of the first file into the object storage service node.

In an example, the application invokes a file write instruction write(c) for a file "c".

Step S1002: The file storage client obtains, from a mapping relationship table, a second file identifier corresponding to the first file.

In this embodiment, after receiving the file write instruction for the first file, the file storage client queries the mapping relationship table cached by the file storage client for the second file identifier corresponding to the first file. For example, it is found in the cache that a second file identifier of the file "c" is 200.

Step S1003: The file storage client sends a file write request, where the file write request carries the second file identifier.

In this embodiment, after finding the second file identifier corresponding to the first file, the file storage client sends the file write request to the object storage service node, where the file write request is used to request to write the data content of the first file into the object storage service node, and the file write request carries the second file identifier found by the file storage client in the cache, indicating that the object storage service node is accessed based on the file identifier.

In an example, the file storage client sends a file write request PUT/200?uritype=fileid, to indicate to access the object storage service node by using the file identifier fileid, and write a file whose file identifier is 200 into the object storage service node.

Step S1004: The object storage service node obtains, from a file index table, a first file name corresponding to the second file identifier.

In this embodiment, after receiving the file write request sent by the file storage client, the object storage service node determines, based on an access identifier of the file write request, that accessing is performed by using the file identifier, parses the second file identifier in the file write request, obtains, from the file index table, the first file name corresponding to the second file identifier, and obtains metadata of the first file based on the first file name.

In an example, the object storage service node receives the file write request PUT/200?uritype=fileid, determines, by using uritype, that the file write request is used for accessing based on the file identifier fileid, and obtains, through parsing, that the file identifier is 200.

Step S1005: The object storage service node obtains the metadata of the first file.

In this embodiment, the object storage service node obtains, from the file index table, the first file name corresponding to the second file identifier, and obtains metadata information of the first file from a metadata index table based on the first file name. The metadata of the first file includes one or more of the following: a file size of the first file, creation time of the first file, access permission on the first file, and a data layout of the first file, and the data layout of the first file includes an identifier of a first storage unit storing the first file, an offset of the first file in the first storage unit, and a length of the first file in the first storage unit.

Step S1006: The object storage service node writes the first file into the first storage unit based on the data layout of the first file.

In this embodiment, after obtaining the metadata of the first file based on the second file identifier, the object storage service node determines, based on the data layout of the first file, the first storage unit storing the first file, and writes the first file into the first storage unit.

Optionally, the file write request carries the offset of the to-be-written first file in the first storage unit, and indicates to write the first file at an offset address of the first storage unit.

Step S1007: The object storage service node updates the metadata of the first file.

In this embodiment, after writing the first file into the first storage unit, the object storage service node needs to update the metadata information of the first file, for example, update the size of the first file, modification time of the first file, and the data layout of the first file.

In this way, in this embodiment, without parsing a full file path layer by layer, the file storage client writes the file into the object storage service node by using the file identifier. This improves data access efficiency.

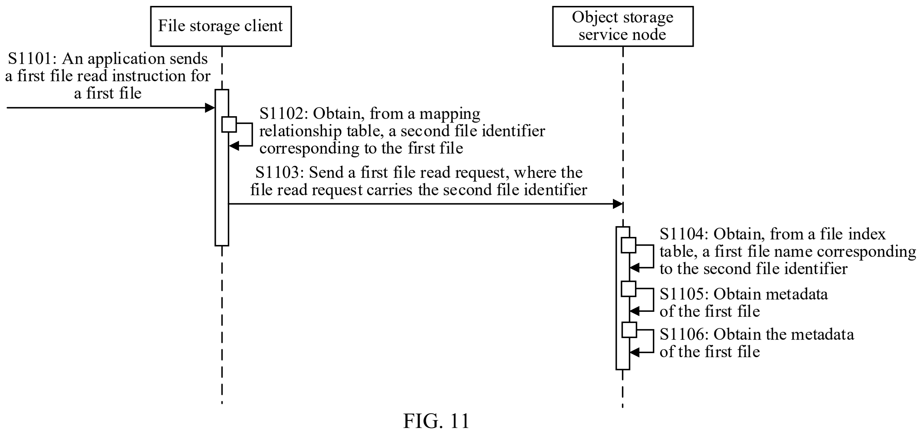

In some possible implementations, as shown in FIG. 11, the data access method further includes steps 1101 to 1106.

Step S1101: An application sends a first file read instruction for a first file.

In this embodiment, after an object storage service node writes the first file, the application may send the first file read instruction for the first file to a file storage client, where the first file read instruction is used to instruct the file storage client to read the first file from the object storage service node.

In an example, the application invokes a first file read instruction read(c) for a file "c".

Step S1102: The file storage client obtains, from a mapping relationship table, a second file identifier corresponding to the first file.

In this embodiment, after receiving the first file read instruction for the first file, the file storage client queries the mapping relationship table cached by the file storage client for the second file identifier corresponding to the first file. For example, it is found in the cache that a second file identifier of the file "c" is 200.

Step S1103: The file storage client sends a first file read request, where the file read request carries the second file identifier.

In this embodiment, after finding the second file identifier corresponding to the first file, the file storage client sends the first file read request to the object storage service node, where the first file read request indicates to read the first file from the object storage service node. The first file read request carries the found second file identifier, indicating that the object storage service node is accessed based on the file identifier.

In an example, the file storage client sends a first file read request GET/200?uritype=fileid, to indicate to access the object storage service node by using the file identifier fileid, and read a file whose file identifier is 200 from the object storage service node.

Step S1104: The object storage service node obtains, from a file index table, a first file name corresponding to the second file identifier.

In this embodiment, after receiving the first file read request sent by the file storage client, the object storage service node determines, based on an access identifier of the first file read request, that accessing is performed by using the file identifier, parses the second file identifier in the first file read request, obtains, from the file index table, the first file name corresponding to the second file identifier, and obtains metadata of the first file based on the first file name.

In an example, the object storage service node receives the first file read request GET/200?uritype=fileid, determines, by using uritype, that the first file read request is used for accessing based on the file identifier fileid, and obtains, through parsing, that the file identifier is 200.

Step S1105: The object storage service node obtains the metadata of the first file.

In this embodiment, the object storage service node obtains, from the file index table, the first file name corresponding to the second file identifier, and obtains metadata information of the first file from a metadata index table based on the first file name. The metadata of the first file includes one or more of the following: a file size of the first file, creation time of the first file, access permission on the first file, and a data layout of the first file, and the data layout of the first file includes an identifier of a first storage unit storing the first file, an offset of the first file in the first storage unit, and a length of the first file in the first storage unit.

Step S1106: The object storage service node reads the first file from the first storage unit based on the data layout of the first file.

In this embodiment, after obtaining the metadata of the first file based on the second file identifier, the object storage service node determines, based on the data layout of the first file, the first storage unit storing the first file, and reads the first file from the first storage unit.

Optionally, the first file read request carries the offset and the length of the to-be-read first file in the first storage unit, and indicates to read the first file at an offset address and a specified length of the first storage unit.

In this way, in this embodiment, without parsing a full file path layer by layer, the file storage client reads the file from the object storage service node by using the file identifier. This improves data access efficiency.

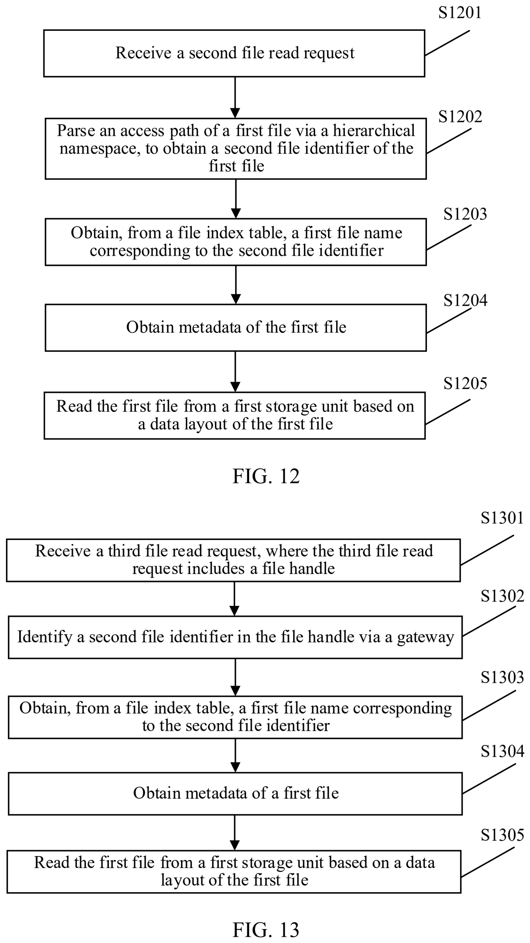

In some possible implementations, as shown in FIG. 12, the data access method further includes steps 1201 to 1205.

Step 1201: Receive a second file read request.

In this embodiment, after receiving the second file read request sent by a file storage client, an object storage service node determines, based on an access identifier of the second file read request, that accessing is performed by using a full file path.

In an example, the file storage client sends a second file read request GET/a/b/c?uritype=path, to indicate to access the object storage service node by using the full file path (path), and read a file whose full file path is /a/b/c from the object storage service node.

Step 1202: Parse an access path of a first file via a hierarchical namespace, to obtain a second file identifier of the first file.

In this embodiment, as shown in FIG. 8, because the object storage service node maps an object in a bucket 803 of an object storage space 801 to a file or a directory in a file system 804 of a file storage space 802, after a file identifier allocator 610 allocates a file identifier to the file or the directory, the object in the bucket 803 is stored by using a file identifier of a parent directory and a file name. Therefore, a file cannot be directly matched by using the full file path. Therefore, the access path of the first file needs to be parsed via the hierarchical namespace, to obtain the second file identifier of the first file. The hierarchical namespace may be a hierarchical namespace 400. The following uses this as an example for description.

In an example, the hierarchical namespace parses the full file path /a/b/c, to obtain that a file identifier of a file c is 200.

Step 1203: Obtain, from a file index table, a first file name corresponding to the second file identifier.

In this embodiment, after the second file identifier of the first file is obtained through parsing, the first file name corresponding to the second file identifier is obtained from the file index table, and metadata of the first file is obtained based on the first file name.

Step 1204: Obtain the metadata of the first file.

In this embodiment, the object storage service node obtains, from the file index table, the first file name corresponding to the second file identifier, and obtains metadata information of the first file from a metadata index table based on the first file name.

Step 1205: Read the first file from a first storage unit based on a data layout of the first file.

In this embodiment, after obtaining the metadata of the first file based on the second file identifier, the object storage service node determines, based on the data layout of the first file, the first storage unit storing the first file, and reads the first file from the first storage unit.

In this way, in this embodiment, when the file storage client accesses the object storage service node by using the full file path to read the file, the object storage service node can identify two access manners: the file identifier and the full file path, and is still compatible with the full file path manner to access the file.

In some possible implementations, as shown in FIG. 13, the data access method further includes steps 1301 to 1305.

Step 1301: Receive a third file read request, where the third file read request includes a file handle.

In this embodiment, after receiving the third file read request sent by a file storage client, an object storage service node determines, based on an access identifier of the third file read request, that accessing is performed based on the file handle, that is, the third file read request is used to access the object storage service node according to a file protocol. The file handle (File Handle) is a data structure used to access a file in an operating system, and is usually an integer or a pointer. The file handle identifies an opened file. Each opened file has a unique file handle.

Optionally, the file protocol may include a server message block (Server Message Block, SMB), a network file system (Network File System, NFS) protocol, or a common internet file system (Common Internet File System, CIFS) protocol. The SMB protocol is an application-level network protocol, and is mainly used for sharing printers, file access, serial ports, and other communication between nodes on a network. SMB is mainly used by a Windows system and is a verified inter-process communication mechanism. NFS allows a system to share directories and files with others on the network. Users and programs may access, by using NFS, files on a remote system in the same way as accessing local files. The CIFS protocol, namely, a common internet file system, is a network file system access protocol. Network file sharing between hosts of the Windows system may be implemented according to the CIFS protocol. The common internet file system (CIFS) is an enhanced version of the Microsoft server message block (SMB) protocol, and is a standard method for computer users to share files on enterprise intranets and the Internet. CIFS defines a remote file access protocol that is compatible with a manner in which application share data on local disks and network file servers, to enable the application to collaborate on the Internet. CIFS runs over TCP/IP, uses a global domain name system (DNS) on the Internet to enhance scalability of CIFS, and optimizes low-speed dial-up connections commonly on the Internet. CIFS may use a redirection packet to send a request to a remote device via the network, and a redirector uses CIFS to send a request to a protocol stack of a local computer.

Optionally, each of the NFS protocol and the SMB protocol defines a file handle in the protocol. For example, a handle of NFSv3 is 64 bytes, and a handle of SMB2 is 16 bytes. For example, in the NFS protocol, a file identifier may be encapsulated into the file handle.

In an example, the file storage client sends a third file read request Rpc:read(200), that is, encapsulates a file identifier 200 into the file handle of the NFS or SMB protocol. A remote procedure call (Remote Procedure Call, RPC) protocol is a protocol used to establish an appropriate framework, and may be used by a program to request a service from a program of another computer on a network without knowing details of the network.

Step 1302: Identify a second file identifier in the file handle via a gateway.

In this embodiment, the object storage service node includes the gateway. After receiving the third file read request sent by the file storage client, the object storage service node may identify, via the gateway, the second file identifier encapsulated into the file handle.

In an example, after receiving the third file read request Rpc:read(200), the gateway converts a file protocol request format into an HTTP format that can be identified by the object storage service node, that is, converts the file protocol request format into GET/200?uritype=fileid, to access the object storage service node by using the file identifier fileid, and read a file whose file identifier is 200 from the object storage service node.

Step 1303: Obtain, from a file index table, a first file name corresponding to the second file identifier.

In this embodiment, after receiving the third file read request sent by the file storage client, the object storage service node determines, based on an access identifier of the third file read request, that accessing is performed by using the file identifier, parses the second file identifier in the third file read request, obtains, from the file index table, the first file name corresponding to the second file identifier, and obtains metadata of the first file based on the first file name.

In an example, the object storage service node receives GET/200?uritype=fileid converted by the gateway, determines, by using uritype, that the third file read request is used for accessing based on the file identifier fileid, and obtains, through parsing, that the file identifier is 200.

Step 1304: Obtain the metadata of the first file.

In this embodiment, the object storage service node obtains, from the file index table, the first file name corresponding to the second file identifier, and obtains metadata information of the first file from a metadata index table based on the first file name.

Step 1305: Read the first file from a first storage unit based on a data layout of the first file.

In this embodiment, after obtaining the metadata of the first file based on the second file identifier, the object storage service node determines, based on the data layout of the first file, the first storage unit storing the first file, and reads the first file from the first storage unit.

Optionally, the third file read request carries an offset and a length of the to-be-read first file in the first storage unit, and indicates to read the first file at an offset address and a specified length of the first storage unit.

In this way, in this embodiment, the file storage client reads the file from the object storage service node according to the file protocol, and conversion from the file protocol to HTTP that can be identified by the object storage service node can be implemented via the gateway, that is, "NAS over HTTP" can be implemented. Even if according to the file protocol, the file storage client can still access, based on the file identifier, the file stored in the object storage service node. This improves data access efficiency. In addition, using the file identifier as the access identifier makes it easier to be compatible with the file protocol.

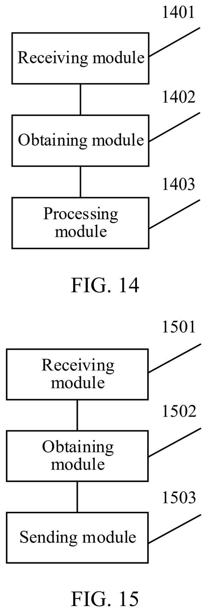

This application further provides a data access apparatus. As shown in FIG. 14, the apparatus 1400 includes:
a receiving module 1401, configured to receive a file creation request, where the file creation request carries a first file name and a first file identifier of a parent directory of a first file;
an obtaining module 1402, configured to obtain metadata of the parent directory that is of the first file and that corresponds to the first file identifier; and
a processing module 1403, configured to: create the first file in the parent directory based on the metadata of the parent directory of the first file, and allocate a second file identifier to the first file, where the first file is a file or a directory in a directory tree.

The processing module 1403 is further configured to record a correspondence between the second file identifier and the first file name into a file index table.

In some possible implementations, the receiving module 1401 is further configured to receive a file write request, where the file write request carries the to-be-written first file and the second file identifier. The obtaining module 1402 is further configured to obtain, from the file index table, the first file name corresponding to the second file identifier, where the first file name indicates metadata of the first file. The obtaining module 1402 is further configured to obtain the metadata of the first file, where the metadata of the first file includes a data layout of the first file. The processing module 1403 is further configured to write the first file into a first storage unit based on the data layout of the first file. The processing module is further configured to update the metadata of the first file.

In some possible implementations, the metadata of the first file includes one or more of the following: a file size of the first file, creation time of the first file, access permission on the first file, and the data layout of the first file, and the data layout of the first file includes an identifier of the first storage unit storing the first file, an offset of the first file in the first storage unit, and a length of the first file in the first storage unit.

In some possible implementations, the receiving module 1401 is further configured to receive a first file read request, where the first file read request carries the second file identifier. The obtaining module 1402 is further configured to obtain, from the file index table, the first file name corresponding to the second file identifier. The obtaining module 1402 is further configured to obtain the metadata of the first file, where the metadata of the first file includes the data layout of the first file. The processing module 1403 is further configured to read the first file from the first storage unit based on the data layout of the first file.

In some possible implementations, the receiving module 1401 is further configured to receive a second file read request, where the second file read request carries an access path of the first file. The processing module 1403 is further configured to parse the access path of the first file via a hierarchical namespace, to obtain the second file identifier of the first file. The obtaining module 1402 is further configured to obtain, from the file index table, the first file name corresponding to the second file identifier. The obtaining module 1402 is further configured to obtain metadata of the first file. The processing module 1403 is further configured to read the first file from a first storage unit based on a data layout of the first file.

In some possible implementations, the receiving module 1401 is further configured to receive a third file read request, where the third file read request includes a file handle. The processing module 1403 is further configured to identify the second file identifier in the file handle via a gateway. The obtaining module 1402 is further configured to obtain, from the file index table, the first file name corresponding to the second file identifier. The obtaining module 1402 is further configured to obtain metadata of the first file. The processing module 1403 is further configured to read the first file from a first storage unit based on a data layout of the first file.

The receiving module 1401, the obtaining module 1402, and the processing module 1403 may all be implemented by software, or may be implemented by hardware. For example, the following uses the processing module 1403 as an example to describe an implementation of the processing module 1403. Similarly, for implementations of the receiving module 1401 and the obtaining module 1402, refer to the implementation of the processing module 1403.

The module is used as an example of a software functional unit, and the processing module 1403 may include code run on a computing instance. The computing instance may include at least one of a physical host (computing device), a virtual machine, and a container. Further, there may be one or more computing instances. For example, the processing module 1403 may include code run on a plurality of hosts/virtual machines/containers. It should be noted that, the plurality of hosts/virtual machines/containers configured to run the code may be distributed in a same region (region), or may be distributed in different regions. Further, the plurality of hosts/virtual machines/containers configured to run the code may be distributed in a same AZ, or may be distributed in different AZs. Each AZ includes one data center or a plurality of data centers that are geographically close to each other. Generally, one region may include a plurality of AZs.

Similarly, the plurality of hosts/virtual machines/containers configured to run the code may be distributed in a same virtual private cloud VPC, or may be distributed in a plurality of VPCs. Generally, one VPC is disposed in one region. A communication gateway needs to be disposed in each VPC for communication between two VPCs in a same region and cross-region communication between VPCs in different regions. The VPCs are interconnected via the communication gateway.

The module is used as an example of a hardware functional unit, and the processing module 1403 may include at least one computing device like a server. The processing module 1403 may alternatively be a device implemented by using an application-specific integrated circuit ASIC or implemented by using a programmable logic device PLD, or the like. The PLD may be implemented by a CPLD, an FPGA, GAL, or any combination thereof.

A plurality of computing devices included in the processing module 1403 may be distributed in a same region, or may be distributed in different regions. The plurality of computing devices included in the processing module 1403 may be distributed in a same AZ, or may be distributed in different AZs. Similarly, the plurality of computing devices included in the processing module 1403 may be distributed in a same VPC, or may be distributed in a plurality of VPCs. The plurality of computing devices may be any combination of computing devices such as a server, an ASIC, a PLD, a CPLD, an FPGA, and GAL.

It should be noted that in another embodiment, the receiving module 1401 may be configured to perform any step in the data access method, the obtaining module 1402 may be configured to perform any step in the data access method, and the processing module 1403 may be configured to perform any step in the data access method. The steps implemented by the receiving module 1401, the obtaining module 1402, and the processing module 1403 may be specified based on needs. The receiving module 1401, the obtaining module 1402, and the processing module 1403 respectively implement different steps in the data access method, to implement all functions of the data processing apparatus.

This application further provides a data access apparatus. As shown in FIG. 15, the apparatus 1500 includes:
a receiving module 1501, configured to receive a file creation instruction sent by an application for a first file, where the first file is a file or a directory in a directory tree;
an obtaining module 1502, configured to obtain a first file identifier of a parent directory of the first file from a mapping relationship table; and
a sending module 1503, configured to send a file creation request to an object storage service node, where the file creation request carries a first file name and the first file identifier.

The receiving module 1501 is further configured to: receive a second file identifier allocated by the object storage service node, and record a correspondence between the second file identifier and the first file name into the mapping relationship table.

In some possible implementations, the receiving module 1501 is further configured to receive a file write instruction sent by the application for the first file. The obtaining module 1502 is further configured to obtain, from the mapping relationship table of a file storage client, the second file identifier corresponding to the first file. The sending module 1503 is further configured to send a file write request to the object storage service node, where the file write request carries the second file identifier. The receiving module 1501 is further configured to receive a processing result of the file write request.

In some possible implementations, the receiving module 1501 is further configured to receive a first file read instruction sent by the application for the first file. The obtaining module 1502 is further configured to obtain, from the mapping relationship table of the file storage client, the second file identifier corresponding to the first file. The sending module 1503 is further configured to send a first file read request to the object storage service node, where the first file read request carries the second file identifier. The receiving module 1501 is further configured to receive a processing result of the first file read request.

The receiving module 1501, the obtaining module 1502, and the sending module 1503 may all be implemented by software, or may be implemented by hardware. For example, the following uses the obtaining module 1502 as an example to describe an implementation of the obtaining module 1502. Similarly, for implementations of the receiving module 1501 and the sending module 1503, refer to the implementation of the obtaining module 1502.

The module is used as an example of a software functional unit, and the obtaining module 1502 may include code run on a computing instance. The computing instance may include at least one of a physical host (computing device), a virtual machine, and a container. Further, there may be one or more computing instances. For example, the obtaining module 1502 may include code run on a plurality of hosts/virtual machines/containers. It should be noted that, the plurality of hosts/virtual machines/containers configured to run the code may be distributed in a same region (region), or may be distributed in different regions. Further, the plurality of hosts/virtual machines/containers configured to run the code may be distributed in a same AZ, or may be distributed in different AZs. Each AZ includes one data center or a plurality of data centers that are geographically close to each other. Generally, one region may include a plurality of AZs.

Similarly, the plurality of hosts/virtual machines/containers configured to run the code may be distributed in a same virtual private cloud VPC, or may be distributed in a plurality of VPCs. Generally, one VPC is disposed in one region. A communication gateway needs to be disposed in each VPC for communication between two VPCs in a same region and cross-region communication between VPCs in different regions. The VPCs are interconnected via the communication gateway.

The module is used as an example of a hardware functional unit, and the obtaining module 1502 may include at least one computing device like a server. The obtaining module 1502 may alternatively be a device implemented by using an application-specific integrated circuit ASIC or implemented by using a programmable logic device PLD, or the like. The PLD may be implemented by a CPLD, an FPGA, GAL, or any combination thereof.

A plurality of computing devices included in the obtaining module 1502 may be distributed in a same region, or may be distributed in different regions. The plurality of computing devices included in the obtaining module 1502 may be distributed in a same AZ, or may be distributed in different AZs. Similarly, the plurality of computing devices included in the obtaining module 1502 may be distributed in a same VPC, or may be distributed in a plurality of VPCs. The plurality of computing devices may be any combination of computing devices such as a server, an ASIC, a PLD, a CPLD, an FPGA, and GAL.

It should be noted that in another embodiment, the receiving module 1501 may be configured to perform any step in the data access method, the obtaining module 1502 may be configured to perform any step in the data access method, and the sending module 1503 may be configured to perform any step in the data access method. The steps implemented by the receiving module 1501, the obtaining module 1502, and the sending module 1503 may be specified based on needs. The receiving module 1501, the obtaining module 1502, and the sending module 1503 respectively implement different steps in the data access method, to implement all functions of the data processing apparatus.

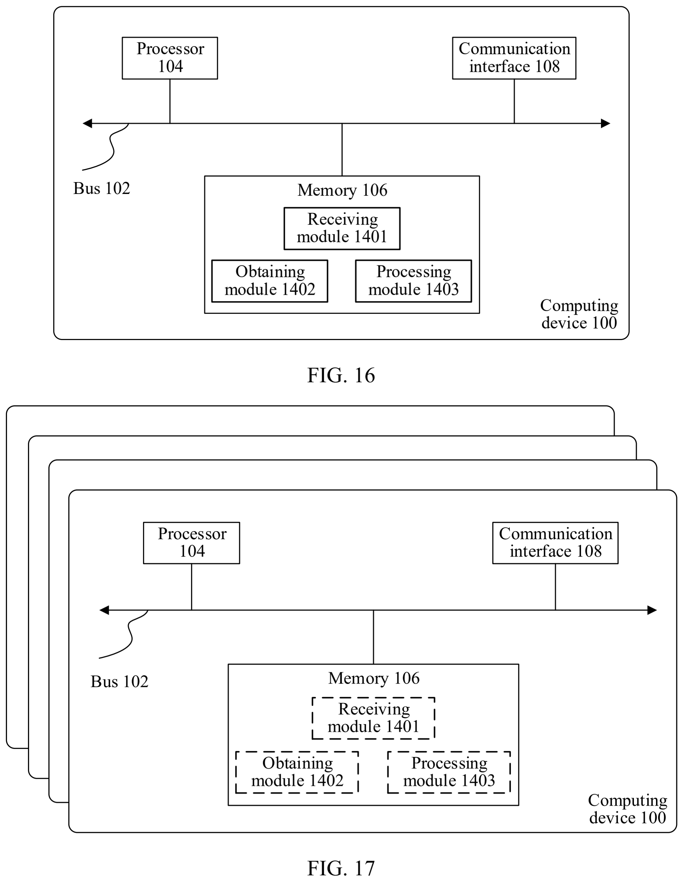

This application further provides a computing device 100. As shown in FIG. 16, the computing device 100 includes a bus 102, a processor 104, a memory 106, and a communication interface 108. The processor 104, the memory 106, and the communication interface 108 communicate with each other through the bus 102. The computing device 100 may be a server or a terminal device. It should be understood that quantities of processors and memories in the computing device 100 are not limited in this application.

The bus 102 may be a peripheral component interconnect (peripheral component interconnect, PCI) bus, an extended industry standard architecture (extended industry standard architecture, EISA) bus, or the like. Buses may be classified into an address bus, a data bus, a control bus, and the like. For ease of representation, only one line is used to represent the bus in FIG. 16, but this does not mean that there is only one bus or only one type of bus. The bus 102 may include a path for information transmission between the components (for example, the memory 106, the processor 104, and the communication interface 108) of the computing device 100.

The processor 104 may include any one or more of processors such as a central processing unit (central processing unit, CPU), a graphics processing unit (graphics processing unit, GPU), a micro processor (micro processor, MP), and a digital signal processor (digital signal processor, DSP).

The memory 106 may include a volatile memory (volatile memory), for example, a random access memory (random access memory, RAM). The processor 106 may further include a non-volatile memory (non-volatile memory), for example, a read-only memory (read-only memory, ROM), a flash memory, a hard disk drive (hard disk drive, HDD), or a solid-state drive (solid-state drive, SSD).

The memory 106 stores executable program code. The processor 104 executes the executable program code to separately implement functions of the receiving module 1401, the obtaining module 1402, and the processing module 1403, so as to implement the data access method. In other words, the memory 106 stores instructions for performing the data access method. FIG. 16 shows merely an example in which the memory 106 stores the program code for implementing the functions of the receiving module 1401, the obtaining module 1402, and the processing module 1403.

The communication interface 108 uses a transceiver module, for example, but not limited to, a network interface card or a transceiver, to implement communication between the computing device 100 and another device or a communication network.

An embodiment of this application further provides a computing device cluster. The computing device cluster includes at least one computing device. The computing device may be a server, for example, a central server, an edge server, or a local server in a local data center. In some embodiments, the computing device may alternatively be a terminal device like a desktop computer, a notebook computer, or a smartphone.

As shown in FIG. 17, the computing device cluster includes at least one computing device 100. Memories 106 in the one or more computing devices 100 in the computing device cluster may store same instructions for performing the data access method.

In some possible implementations, alternatively, the memories 106 in the one or more computing devices 100 in the computing device cluster may separately store a part of instructions for performing the data access method. In other words, a combination of the one or more computing devices 100 may jointly execute the instructions for performing the data access method.

It should be noted that, memories 106 in different computing devices 100 in the computing device cluster may store different instructions for separately performing a part of functions of the data processing apparatus. In other words, instructions stored in memories 106 in different computing devices 100 may be used to implement a function of one or more of the receiving module 1401, the obtaining module 1402, and the processing module 1403, or implement a function of one or more of the receiving module 1501, the obtaining module 1502, and the sending module 1503.

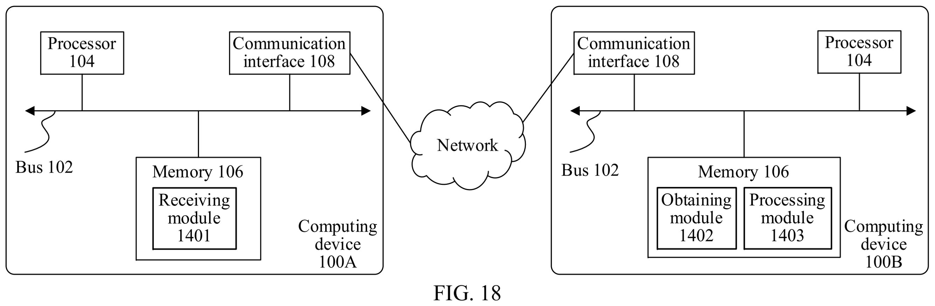

In some possible implementations, the one or more computing devices in the computing device cluster may be connected via a network. The network may be a wide area network, a local area network, or the like. FIG. 18 shows a possible implementation. As shown in FIG. 18, two computing devices 100A and 100B are connected via a network. Specifically, each computing device is connected to the network through a communication interface in the computing device. In this type of possible implementation, a memory 106 in the computing device 100A stores instructions for performing a function of the receiving module 1401. In FIG. 18, an example in which the memory 106 in the computing device 100A stores the instructions for performing the function of the receiving module 1401 is used. In addition, a memory 106 in the computing device 100B stores instructions for performing functions of the obtaining module 1402 and the processing module 1403. In FIG. 18, an example in which the memory 106 in the computing device 100B stores the instructions for performing the functions of the obtaining module 1402 and the processing module 1403 is used.

The connection manner in the computing device cluster shown in FIG. 18 may be used in consideration of that a large amount of data needs to be calculated in the data access method provided in this application. Therefore, the functions implemented by the obtaining module 1402 and the processing module 1403 are considered to be performed by the computing device 100B.

It should be understood that functions of the computing device 100A shown in FIG. 18 may alternatively be completed by a plurality of computing devices 100. Similarly, functions of the computing device 100B may alternatively be completed by a plurality of computing devices 100.

An embodiment of this application further provides a computer program product including instructions. The computer program product may be software or a program product that includes the instructions and that can run on a computing device or can be stored in any usable medium. When the computer program product runs on at least one computing device, the at least one computing device is enabled to perform the data access method.

An embodiment of this application further provides a computer-readable storage medium. The computer-readable storage medium may be any usable medium that can be stored by a computing device, or a data storage device, for example, a data center, including one or more usable media. The usable medium may be a magnetic medium (for example, a floppy disk, a hard disk, or a magnetic tape), an optical medium (for example, a DVD), a semiconductor medium (for example, a solid-state drive), or the like. The computer-readable storage medium includes instructions. The instructions instruct a computing device to perform the data access method.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions recorded in the foregoing embodiments or make equivalent replacements to some technical features thereof. Such modifications or replacements do not make the essence of the corresponding technical solutions depart from the protection scope of the technical solutions of embodiments of the present invention.

## Claims

1. A data access method, wherein the method is applied to an object storage service node, a storage bucket of the object storage service node stores at least one object, the object storage service node comprises a hierarchical namespace, the hierarchical namespace is used to map the at least one object to a file or a directory in a directory tree, and the method comprises:
receiving a file creation request, wherein the file creation request carries a first file name and a first file identifier of a parent directory of a first file;
obtaining metadata of the parent directory that is of the first file and that corresponds to the first file identifier;
creating the first file in the parent directory based on the metadata of the parent directory of the first file, and allocating a second file identifier to the first file, wherein the first file is a file or a directory in the directory tree; and
recording a correspondence between the second file identifier and the first file name into a file index table.

2. The method according to claim 1, wherein the method further comprises:
receiving a file write request, wherein the file write request carries the to-be-written first file and the second file identifier;
obtaining, from the file index table, the first file name corresponding to the second file identifier, wherein the first file name indicates metadata of the first file;
obtaining the metadata of the first file, wherein the metadata of the first file comprises a data layout of the first file;
writing the first file into a first storage unit based on the data layout of the first file; and
updating the metadata of the first file.

3. The method according to claim 1 or 2, wherein the metadata of the first file comprises one or more of the following: a file size of the first file, creation time of the first file, access permission on the first file, and the data layout of the first file, and the data layout of the first file comprises an identifier of the first storage unit storing the first file, an offset of the first file in the first storage unit, and a length of the first file in the first storage unit.

4. The method according to any one of claims 1 to 3, wherein the method further comprises:
receiving a first file read request, wherein the first file read request carries the second file identifier;
obtaining, from the file index table, the first file name corresponding to the second file identifier;
obtaining the metadata of the first file, wherein the metadata of the first file comprises the data layout of the first file; and
reading the first file from the first storage unit based on the data layout of the first file.

5. The method according to claim 1, wherein the method further comprises:
receiving a second file read request, wherein the second file read request carries an access path of the first file;
parsing the access path of the first file via the hierarchical namespace, to obtain the second file identifier of the first file;
obtaining, from the file index table, the first file name corresponding to the second file identifier;
obtaining metadata of the first file; and
reading the first file from the first storage unit based on a data layout of the first file.

6. The method according to claim 1, wherein the object storage service node comprises a gateway, and the method further comprises:
receiving a third file read request, wherein the third file read request comprises a file handle;
identifying the second file identifier in the file handle via the gateway;
obtaining, from the file index table, the first file name corresponding to the second file identifier;
obtaining metadata of the first file; and
reading the first file from the first storage unit based on a data layout of the first file.

7. A data access method, wherein the method is applied to a file storage client, the file storage client accesses an object storage service node through a file interface, a storage bucket of the object storage service node stores at least one object, the object storage service node comprises a hierarchical namespace, the hierarchical namespace is used to map the at least one object to a file or a directory in a directory tree, and the method comprises:
receiving a file creation instruction sent by an application for a first file, wherein the first file is a file or a directory in the directory tree;
obtaining a first file identifier of a parent directory of the first file from the mapping relationship table;
sending a file creation request to the object storage service node, wherein the file creation request carries the first file name and the first file identifier; and
receiving a second file identifier allocated by the object storage service node, and recording a correspondence between the second file identifier and the first file name into the mapping relationship table.

8. The method according to claim 7, wherein the method further comprises:
receiving a file write instruction sent by the application for the first file;
obtaining, from the mapping relationship table of the file storage client, the second file identifier corresponding to the first file;
sending a file write request to the object storage service node, wherein the file write request carries the second file identifier; and
receiving a processing result of the file write request.

9. The method according to claim 7 or 8, wherein the method further comprises:
receiving a first file read instruction sent by the application for the first file;
obtaining, from the mapping relationship table of the file storage client, the second file identifier corresponding to the first file;
sending a first file read request to the object storage service node, wherein the first file read request carries the second file identifier; and
receiving a processing result of the first file read request.

10. A data access apparatus, wherein the apparatus is used in an object storage service node, a storage bucket of the object storage service node stores at least one object, the object storage service node comprises a hierarchical namespace, the hierarchical namespace is used to map the at least one object to a file or a directory in a directory tree, and the apparatus comprises:
a receiving module, configured to receive a file creation request, wherein the file creation request carries a first file name and a first file identifier of a parent directory of a first file;
an obtaining module, configured to obtain metadata of the parent directory that is of the first file and that corresponds to the first file identifier; and
a processing module, configured to: create the first file in the parent directory based on the metadata of the parent directory of the first file, and allocate a second file identifier to the first file, wherein the first file is a file or a directory in the directory tree, wherein
the processing module is further configured to record a correspondence between the second file identifier and the first file name into a file index table.

11. The apparatus according to claim 10, wherein the apparatus further comprises:
the receiving module is further configured to receive a file write request, wherein the file write request carries the to-be-written first file and the second file identifier;
the obtaining module is further configured to obtain, from the file index table, the first file name corresponding to the second file identifier, wherein the first file name indicates metadata of the first file;
the obtaining module is further configured to obtain the metadata of the first file, wherein the metadata of the first file comprises a data layout of the first file;
the processing module is further configured to write the first file into a first storage unit based on the data layout of the first file; and
the processing module is further configured to update the metadata of the first file.

12. The apparatus according to claim 10 or 11, wherein the metadata of the first file comprises one or more of the following: a file size of the first file, creation time of the first file, access permission on the first file, and the data layout of the first file, and the data layout of the first file comprises an identifier of the first storage unit storing the first file, an offset of the first file in the first storage unit, and a length of the first file in the first storage unit.

13. The apparatus according to any one of claims 10 to 12, wherein the apparatus further comprises:
the receiving module is further configured to receive a first file read request, wherein the first file read request carries the second file identifier;
the obtaining module is further configured to obtain, from the file index table, the first file name corresponding to the second file identifier;
the obtaining module is further configured to obtain the metadata of the first file, wherein the metadata of the first file comprises the data layout of the first file; and
the processing module is further configured to read the first file from the first storage unit based on the data layout of the first file.

14. The apparatus according to claim 10, wherein the apparatus further comprises:
the receiving module is further configured to receive a second file read request, wherein the second file read request carries an access path of the first file;
the processing module is further configured to parse the access path of the first file via the hierarchical namespace, to obtain the second file identifier of the first file;
the obtaining module is further configured to obtain, from the file index table, the first file name corresponding to the second file identifier;
the obtaining module is further configured to obtain metadata of the first file; and
the processing module is further configured to read the first file from the first storage unit based on a data layout of the first file.

15. The apparatus according to claim 10, wherein the object storage service node comprises a gateway, and the apparatus further comprises:
the receiving module is further configured to receive a third file read request, wherein the third file read request comprises a file handle;
the processing module is further configured to identify the second file identifier in the file handle via the gateway;
the obtaining module is further configured to obtain, from the file index table, the first file name corresponding to the second file identifier;
the obtaining module is further configured to obtain metadata of the first file; and
the processing module is further configured to read the first file from the first storage unit based on a data layout of the first file.

16. A data access apparatus, wherein the apparatus is used in a file storage client, the file storage client accesses an object storage service node through a file interface, a storage bucket of the object storage service node stores at least one object, the object storage service node comprises a hierarchical namespace, the hierarchical namespace is used to map the at least one object to a file or a directory in a directory tree, and the apparatus comprises:
a receiving module, configured to receive a file creation instruction sent by an application for a first file, wherein the first file is a file or a directory in the directory tree;
an obtaining module, configured to obtain a first file identifier of a parent directory of the first file from the mapping relationship table; and
a sending module, configured to send a file creation request to the object storage service node, wherein the file creation request carries the first file name and the first file identifier, wherein
the receiving module is further configured to: receive a second file identifier allocated by the object storage service node, and record a correspondence between the second file identifier and the first file name into the mapping relationship table.

17. The apparatus according to claim 16, wherein the apparatus further comprises:
the receiving module is further configured to receive a file write instruction sent by the application for the first file;
the obtaining module is further configured to obtain, from the mapping relationship table of the file storage client, the second file identifier corresponding to the first file;
the sending module is further configured to send a file write request to the object storage service node, wherein the file write request carries the second file identifier; and
the receiving module is further configured to receive a processing result of the file write request.

18. The apparatus according to claim 16 or 17, wherein the apparatus further comprises:
the receiving module is further configured to receive a first file read instruction sent by the application for the first file;
the obtaining module is further configured to obtain, from the mapping relationship table of the file storage client, the second file identifier corresponding to the first file;
the sending module is further configured to send a first file read request to the object storage service node, wherein the first file read request carries the second file identifier; and
the receiving module is further configured to receive a processing result of the first file read request.

19. A computing device cluster, comprising at least one computing device, wherein each computing device comprises a processor and a memory; and
a processor of the at least one computing device is configured to execute instructions stored in a memory of the at least one computing device, to enable the computing device cluster to perform the method according to any one of claims 1 to 6.

20. A computing device cluster, comprising at least one computing device, wherein each computing device comprises a processor and a memory; and
a processor of the at least one computing device is configured to execute instructions stored in a memory of the at least one computing device, to enable the computing device cluster to perform the method according to any one of claims 7 to 9.

21. A computer program product comprising instructions, wherein when the instructions are run by a computing device cluster, the computing device cluster is enabled to perform the method according to any one of claims 1 to 6.

22. A computer program product comprising instructions, wherein when the instructions are run by a computing device cluster, the computing device cluster is enabled to perform the method according to any one of claims 7 to 9.

23. A computer-readable storage medium, comprising computer program instructions, wherein when the computer program instructions are executed by a computing device cluster, the computing device cluster performs the method according to any one of claims 1 to 6.

24. A computer-readable storage medium, comprising computer program instructions, wherein when the computer program instructions are executed by a computing device cluster, the computing device cluster performs the method according to any one of claims 7 to 9.
